(19) Europäisches Patentamt
European Patent Office
Office européen des brevets

(11) **EP 3 023 932 A1**

(12) **EUROPEAN PATENT APPLICATION**

(43) Date of publication:
**25.05.2016 Bulletin 2016/21**

(51) Int Cl.:
***G06T 5/00*** *(2006.01)*

(21) Application number: **14306837.7**

(22) Date of filing: **19.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Jouet, Pierrick
35576 Cesson Sévigné (FR)**

• **Baillard, Caroline
35576 Cesson Sévigné (FR)**
• **Alleaume, Vincent
35576 Cesson Sévigné (FR)**

(74) Representative: **Browaeys, Jean-Philippe
Technicolor
1, rue Jeanne d'Arc
92443 Issy-les-Moulineaux (FR)**

(54) **Method and device for correction of depth values in a depth map**

(57)    A method and device for correcting depth measurement values in a depth map, the depth map having a corresponding color map, the method comprising identifying a first region of the depth map including at least one erroneous depth value (S101); obtaining at least one reliable region of the depth map neighboring the first region (S102), said at least one reliable region including reliable depth values; performing color segmentation for the first region using color information, from the corresponding color map, associated with the at least one reliable regions of the depth map (S104); and allocating corrected depth values to erroneous depth values of the first region of the depth map based on the color segmentation (S105).

```
┌─────────────────────┐
│ Acquired depth map  │
└─────────────────────┘
           │
           ▼
   ┌─────────────────┐   S101
   │    IDENTIFY     │
   │  ERROR REGION   │
   └─────────────────┘
           │
           ▼
   ┌─────────────────┐   S102
   │  OBTAIN LOCAL   │
   │ RELIABLE REGIONS│
   └─────────────────┘
           │
┌────────┐ ▼
│ Colour │ ┌─────────────────┐   S103
│  Map   │─│  RETRIVE COLOUR │
└────────┘ │      DATA       │
           └─────────────────┘
           │
           ▼
   ┌─────────────────┐   S104
   │ PERFORM COLOUR  │
   │  SEGMENTATION   │
   └─────────────────┘
           │
           ▼
   ┌─────────────────┐   S105
   │ ALLOCATE CORRECTED │
   │   DEPTH  VALUES │
   └─────────────────┘
           │
           ▼
┌─────────────────────┐
│ Corrected depth map │
└─────────────────────┘
```

**FIG. 2**

EP 3 023 932 A1

**Description**

<u>TECHNICAL FIELD</u>

The present invention relates to a method and device for correcting depth values in a depth map.

<u>BACKGROUND</u>

Acquiring depth information in a scene is one of the most fundamental and challenging problems in imaging. The estimation of the depth of an object in an acquired image of a scene finds many applications in areas such as robotics, gaming, gesture recognition, 3D visual entertainment and the like. Moreover, information related to the depth of objects in a scene is useful for different purposes, such as visual effects and conversion of images from 2D-to-3D for 3D screening in television and film production. Depth information is also useful for view synthesis at the viewing end, for example, to adapt the image content to the type of display used. Depth information can be delivered with the corresponding image data in the video stream, to a device rendering the images.

Techniques for acquiring depth information can generally be classified into two types: passive methods in which multiple cameras are used to record images of a scene from multiple different view-points and disparity estimation is performed using the acquired stereo images; and active methods in which depth is estimated based on active illumination of the scene and object reflection. For active methods Time-of-Flight (ToF) or structured light devices may be used.

Depth maps provided by a depth camera such as a Kinect camera or the like are often incomplete because there are some areas of the image where depth measurement is not possible or not reliable. Such points are often referred to as NMD (No Measurement Depth). Errors often occur where there are transitions in the recorded scene, for example between a foreground and a background, at the edge of an object or person etc.

The present invention has been devised with the foregoing issues in mind.

<u>SUMMARY</u>

In a general form the invention concerns using color segmentation to repair a depth map.

According to an aspect of the invention there is provided a method of correcting depth measurement values in a depth map, the depth map having a corresponding color map, the method comprising identifying a first region of the depth map including at least one erroneous depth value; obtaining at least one reliable region of the depth map neighboring the first region, said at least one reliable region including reliable depth values; performing color segmentation for the first region using color information, from the corresponding color map, associated with the at least one reliable regions of the depth map; and allocating corrected depth values to erroneous depth values of the first region of the depth map based on the color segmentation.

A first aspect of the invention provides a method of correcting depth measurement values in a depth map, the depth map having a corresponding color map, the method comprising: identifying a first region of the depth map including at least one erroneous depth value; obtaining reliable regions of the depth map neighboring the first region, said reliable regions including reliable depth values; performing color segmentation for the first region using color information, from the corresponding color map, associated with the reliable regions of the depth map; and allocating corrected depth values to erroneous depth values of the first region of the depth map based on the color segmentation.

In an embodiment, the results from the color segmentation are used as weighting to classify the depth values to be corrected.

In an embodiment, the depth values to be corrected are assigned to one of the reliable regions based on the color segmentation.

In an embodiment, the corrected depth value is determined by interpolation of neighboring depth values.

In an embodiment, obtaining reliable regions comprises for each reliable region generating a homogeneous depth region from at least one reliable depth value.

In an embodiment, the method comprises processing a depth segmentation for the reliable regions by clipping with an argument based on the average of contiguous points.

In an embodiment, a graph cut process is used to perform color segmentation.

According to a further aspect of the invention there is provided a device for correcting depth measurement values in a depth map, the depth map having a corresponding color map, the device comprising a processor configured to:

identify a first region of the depth map including at least one erroneous depth value;
obtain reliable regions of the depth map neighboring the first region, said reliable regions including reliable depth values;
perform color segmentation for the first region using color information, from the corresponding color map, associated with the reliable regions of the depth map; and
allocate corrected depth values to erroneous depth values of the first region of the depth map based on the color segmentation.

In an embodiment, the results from the color segmentation are used as weighting to classify the depth values to be corrected.

In an embodiment, the depth values to be corrected are assigned to one of the reliable regions based on the color segmentation.

In an embodiment, the corrected depth value is determined by interpolation of neighboring depth values.

In an embodiment, the processor is configured to obtain reliable regions by generating a homogeneous depth region for each reliable region from at least one reliable depth value.

In an embodiment, the processor is configured to perform depth segmentation for the reliable regions by clipping with an argument based on the average of contiguous points.

In an embodiment, the processor is configured to perform a graph cut process for color segmentation.

In an embodiment the corrected depth value is determined by interpolation of neighboring depth values in the associated reliable region.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1 is a schematic block diagram of a depth map processing device in accordance with an embodiment of the invention;

FIG. 2 is a flow chart illustrates steps of a method for correcting a depth map in accordance with an embodiment of the invention;

FIG. 3 is an example of an erroneous region within a depth map;

FIG. 4 is an example of reliable regions of a depth map generated in accordance with an embodiment of the invention;

FIG. 5A-5F schematically illustrate steps of a method for correcting a depth map in accordance with an embodiment of the invention;

FIG. 6 schematically illustrates an example of an interpolation method in accordance with an embodiment of the invention; and

FIG. 7 is an example of an imaging system in which one or more embodiments of the invention may be implemented.

DETAILED DESCRIPTION

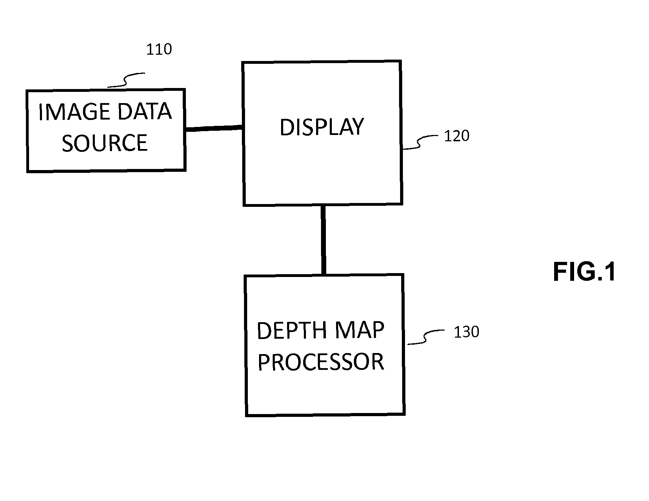

Figure 1 is a schematic block diagram of a device 100 for correcting a depth map in accordance with an embodiment of the invention. The depth map correction device 100 comprises a source of image data 110 including a depth map and a color map for each image; a display 120 for displaying an image, a depth map and/or a color map; and a depth map correction processor 130 for correcting a depth map in accordance with one or more embodiments of the invention.

The image data source 110 may generally correspond to any source of image data captured by an imaging device and/or which is computer-generated. The data may be in the process of being acquired or generated or may have been pre-acquired or pre-generated. In general references to images herein include both still pictures as well as frames of video data. In some examples, the image source 110 may correspond to a camera configured to acquire depth information such as a Kinect type camera. In some embodiments of the invention the image data source 110 may be a computer-readable storage medium storing image data. Alternatively the image source may be an interface for receiving image data from an external source or a processing unit that generates digital images for example by executing a video game or any other interactive multimedia source.

An acquired or stored depth map to be processed by depth map processor 130 may be displayed on display 120. The acquired depth map may include one or more erroneous depth values. A depth map corrected by the process implemented by depth map processor 130 may also be displayed by display 120.

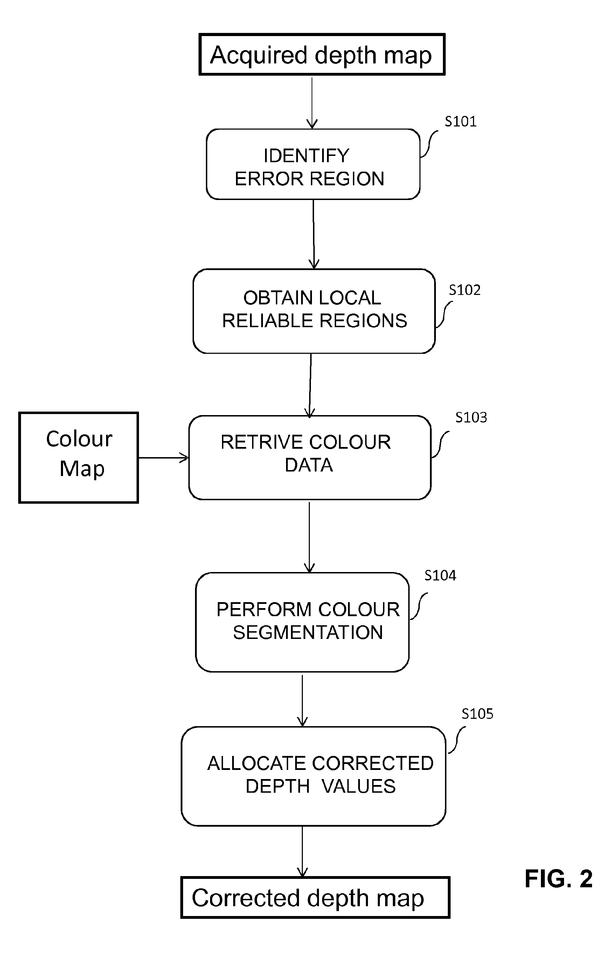

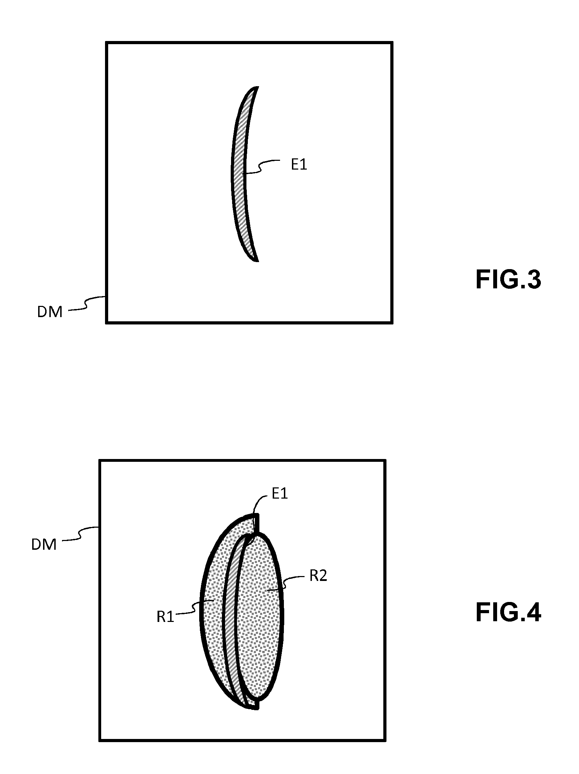

A method for correcting erroneous depth values in accordance with an embodiment of the invention will be described with reference to the flow chart of Figure 2. In an initial step S101 a region of an acquired depth map including at least one erroneous depth value is identified, for example a region E1 of a depth map as illustrated in Figure 3. Such an area may for example correspond to the edge of an object or person in an image, or a transition from foreground to background in a scene of an acquired image.

In step S102 at least one reliable or high confidence region of the depth map neighboring the first region is obtained from reliable depth values in the vicinity of the erroneous region E1. In the example of Figure 3, two neighboring regions R1 and R2 are obtained as illustrated in Figure 4. Reliable depth values neighboring the erroneous region are used to initialize the building of homogenous depth areas R1, R2. A depth segmentation process is applied, for example by performing clipping with an argument equal to the average of contiguous points (+/- delta). The result of this operation is two local depth areas R1, R2 neighboring the identified erroneous depth map area and containing reliable depth values. In the example illustrated in FIG. 4, the reliable regions R1 and R2 in the depth map surround the erroneous region E1.

A color map corresponding to the depth map for the image contains color information for the pixels of the image corresponding to the respective depth map pixels. Color information for the pixels of the reliable regions R1 and R2 is retrieved in step S103 to initialize a color segmentation process. In step S104 color segmentation is performed for the error region E1 using the color information retrieved for the reliable regions R1 and R2 of the depth map.

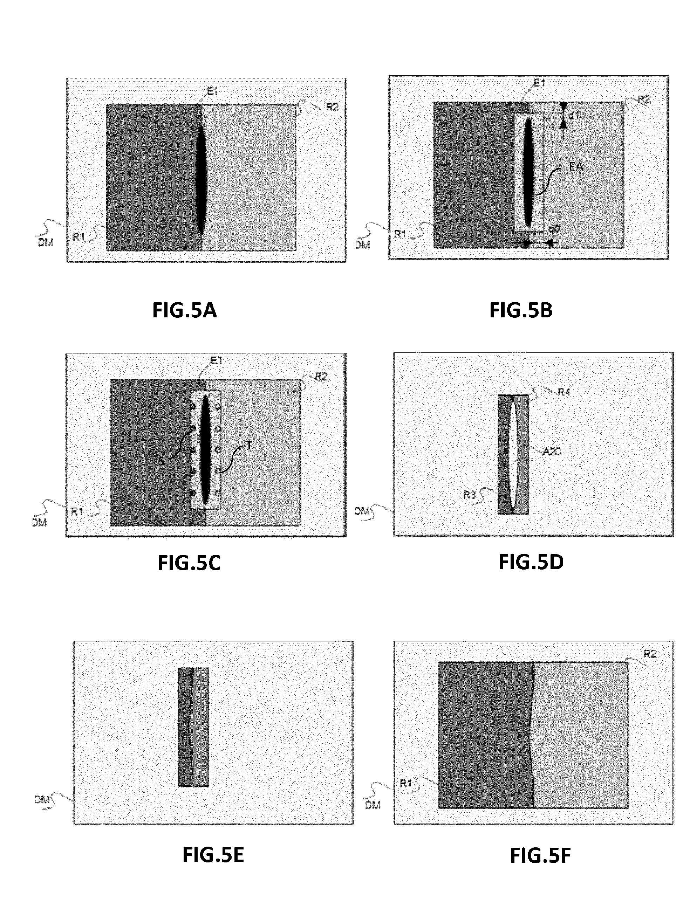

An example of a color segmentation process in accordance with an embodiment of the invention will be described with reference to Figure 5A to 5E. Figure 5A illustrates a depth map with an error region E1 of non measured points and two reliable neighboring regions R1 and R2. As illustrated in the example of Figure 5B, color segmentation may be processed in a rectangular area EA encompassing the NMD area E1. The NMD area E1 is detected by thresholding (NMD values are set to a defined value), minimum and maximum values are then detected on the X and Y axes. The rectangular area EA is defined as: (xmin -d0, xmax +d0,ymin -d1, ymax + d1).

A graph cut process may be used for example to perform the color segmentation. Points from the reliable regions R1 and R2 are used as "high confidence points" to perform the color segmentation (i.e. as source and sink references for the graph cut algorithm used in the color segmentation).

Figure 5C illustrates how the sink and source anchors S and T within the rectangular area EA are set for the graph cut process. S anchor points may correspond to values of a background region while T anchor points may correspond to values of a foreground region. Figure 5D illustrates how the initial values are selected for the graph cut process. For example R3 is used to initialize background values and R4 is used to initialize foreground values for erroneous region A2C.

The reliable region with the lowest average depth value may be considered as foreground and the other reliable region may be considered as background. For example region R1 may correspond to a foreground and region R2 may correspond to a background region. Figure 5E illustrates an example of a result of the color segmentation process.

In step S105 corrected depth values are allocated to erroneous depth values of the first region of the depth map based on the color segmentation. For this step, results from the color segmentation of the reliable regions R1 and R2 for erroneous depth area E1 are used as weighting to classify the depth values to be corrected in the erroneous region E1. Figure 5F illustrates the resulting correction of the depth map.

The step of allocation of corrected depth values may be performed as follows: After the color segmentation, points from erroneous region E1 of the depth are allocated to either one of the regions R1 or R2 according to the associated color data from the color segmentation, for determination of a depth value, Then, with the information of region allocation it is possible to set a depth value to respective erroneous points of region E1. For example, the corrected depth value allocated can be the result of an interpolation of the nearest neighbors, from the allocated region.

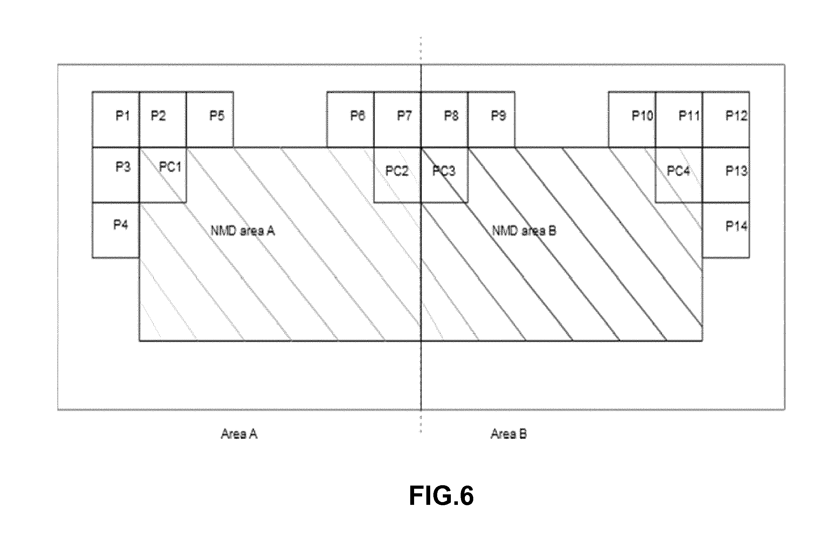

An example of an interpolation process that may be applied is schematically illustrated in Figure 6. Taking NMD Area A and NMD Area B of as the result of the color segmentation process on erroneous area E, pixels from NMD area A are interpolated from values of depth pixels of area A and pixels from NMD area B are interpolated from values of depth pixels of area B. Pixels with reliable neighboring pixels are first computed, for example pixel PC1 of NMD area A or PC4 of NMD area B. The interpolation value attributed to the pixels corresponds to the mean of the value of neighbor pixels.

For example for pixel PC1 at the upper left corner of NMD area A having neighboring pixels from a reliable region R1 the interpolated value is calculated as:

$$PC1 = \frac{\text{өA} * (P1 + P2 + P3 + P4 + P5)}{5}$$

The interpolated value for pixel PC2 at the upper right corner of NMD area A is calculated from its neighboring reliable pixels P6 and P7 of corresponding reliable region R1 as

$$PC2 = \frac{\text{өA} * (P6 + P7) + \text{өB} * P8}{2}$$

The interpolated value for pixel PC3 at the upper right corner of NMD area B is calculated from its neighboring reliable pixels P8 and P9 of corresponding reliable region R2 as

$$PC3 = \frac{\text{өA} * P7 + \text{өB} * (P9 + P8)}{2}$$

The interpolated value for Pixel PC4 at the upper right corner of NMD area B having neighboring pixels from a reliable region R2 is calculated as:

$$PC4 = \frac{\text{өA} * (P11 + P12 + P13 + P14 + P15)}{5}$$

A multiply coefficient ex is applied depending on the associated area:

- eA = 1 if neighboring pixel Pi is in reliable Area A, 0 otherwise
- eB = 1 if neighboring pixel Pi is in reliable Area B, 0 otherwise

Of course, more sophisticated processes may be used, for example patch-based texture synthesis algorithms. In this way a corrected depth map is obtained.

The corrected depth information may be used for live applications, may be stored for later use, encoded for transmitted to a local or remote destination(s) for example by broadcast, or used straight away to provide visual 3D effects on a 3D enabled display.

Based on the corrected depth map as processed in accordance with embodiments of the invention, a 3D image may be rendered for viewing.

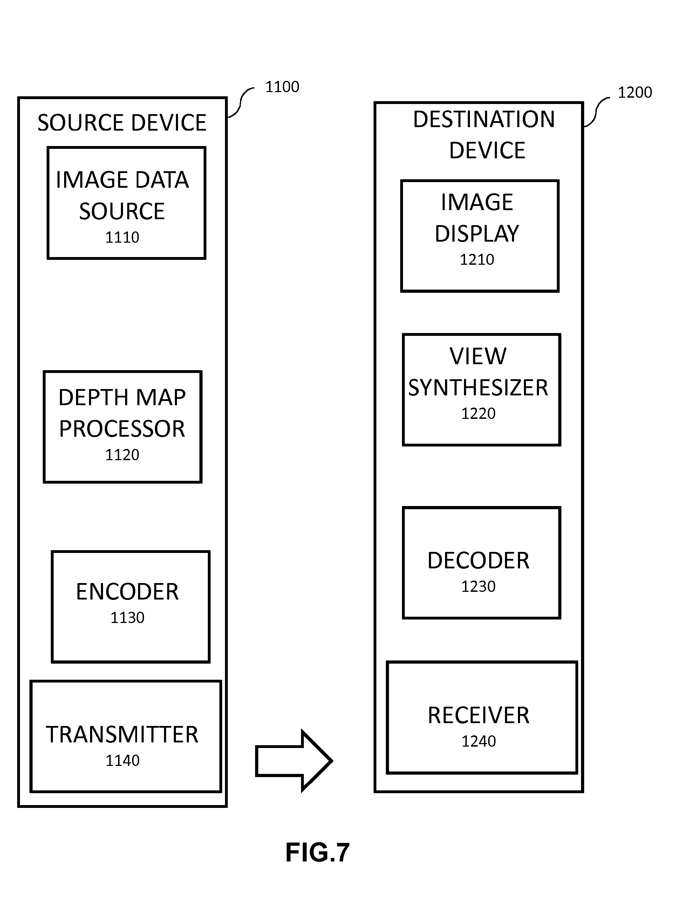

Figure 7 is a block diagram illustrating an example of an imaging system in which embodiments of the invention may be implemented. The system 1000 includes a source device 1100 for acquiring image data and a destination device 1200 for providing 3D visualization of the acquired image data and depth map data. The source device 1100 comprises an image source 1110 for acquiring image data including color data and depth map data, a depth map processor 1120 for processing the depth map data in accordance with an embodiment of the invention to correct for erroneous depth map values, an encoder 1130 for encoding the depth information and corresponding image data, and a transmitter 1140. The destination device 1200 comprises a receiver 1240 for receiving encoded data transmitted from the source device 1100, a decoder 1230 for decoded received data to provide image data and corresponding depth information, a view synthesizing unit for processing the image data and depth information for 3D rendering of 3D images, and an display 1210 for visualization of 3D images. Source device 1100 and/or destination device 1200 may comprise wireless communication devices, such as wireless handsets, smart telephones or any wireless devices that can communicate picture and/or video information over a communication channel, in which case the communication channel may comprise a wireless communication channel. Destination device 1200 may be referred to as a three-dimensional (3D) display device or a 3D rendering device.

In some embodiments the image data source 1110 may be a computer-readable storage medium. Alternatively the image source may be an interface for receiving image data from an external source, a processing unit that generates digital images such as by executing a video game or other interactive multimedia source, or other sources of image data. Image source 1110 may generally correspond to a source of any one or more of captured, pre-captured, and/or computer-generated images. In some examples, image source 1110 may correspond to a depth type camera for acquiring depth information. In general, references to images herein include both still pictures as well as frames of video data. Thus, embodiments of the invention may apply both to still digital pictures as well as frames of captured digital video data or computer-generated digital video data.

Depth map processor 1120 processes the depth map using associated color information to correct for any erroneous values in accordance with an embodiment of the invention. The depth map processor 1120 transfers the corrected depth map to encoder 1130, which encodes the image data including the corrected depth map to form encoded image data. Transmitter 1140 then transmits the encoded image data to destination device 1200.

The receiver module 1240 of destination device 1200 receives the encoded image data. Decoder 1230 decodes the encoded image data to extract the corrected depth map and other image data. Based on the depth map and corresponding image data the view synthesizing unit 1220 can process the data to provide a depth based image to image display 1210. Based on the received data, the image display 1210 renders a three-dimensional type image.

It will be appreciated that in some embodiments of the invention the depth map processor for correcting the depth map may be provided at the receiver end rather than the transmitter end.

In some embodiments of the invention the reconstructed images may undergo additional processing at either the source device 1100 or destination device 1200.

Embodiments of the invention described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, tablets, cell phones, portable/personal digital assistants ("PDAs"), and other devices that facilitate communication of information between end-users.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been described with respect to the generation of two neighboring regions it will be appreciated that one neighboring region at least partially surrounding the region to be corrected may be generated, or any number of neighboring regions may be generated.

Moreover, it will be appreciated that the depth map may contain any number of erroneous regions to be corrected.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A method of correcting depth measurement values in a depth map, the depth map having a corresponding color map, the method comprising:

    identifying a first region of the depth map including at least one erroneous depth value;
    obtaining reliable regions of the depth map neighboring the first region, said reliable regions including reliable depth values;
    performing color segmentation for the first region using color information, from the corresponding color map, associated with the reliable regions of the depth map; and
    allocating corrected depth values to erroneous depth values of the first region of the depth map based on the color segmentation.

2. A method according to claim 1, wherein the results from the color segmentation are used as weighting to classify the depth values to be corrected.

3. A method according to claim 1 or 2, wherein the depth values to be corrected are assigned to one of the reliable regions based on the color segmentation, for determination of the corresponding corrected values.

4. A method according to claim 3, wherein the corrected depth value is determined by interpolation of neighboring depth values.

5. A method according to any preceding claim, wherein obtaining reliable regions comprises for each reliable region generating a homogeneous depth region from at least one reliable depth value.

6. A method according to claim 5, further comprising processing a depth segmentation for the reliable regions by clipping with an argument based on the average of contiguous points.

7. A method according to any preceding claim, wherein a graph cut process is used to perform color segmentation.

8. A device for correcting depth measurement values in a depth map, the depth map having a corresponding color map, the device comprising a processor configured to:

identify a first region of the depth map including at least one erroneous depth value;
obtain reliable regions of the depth map neighboring the first region, said reliable regions including reliable depth values;
perform color segmentation for the first region using color information, from the corresponding color map, associated with the reliable regions of the depth map; and
allocate corrected depth values to erroneous depth values of the first region of the depth map based on the color segmentation.

9. A device according to claim 8, wherein the results from the color segmentation are used as weighting to classify the depth values to be corrected.

10. A device according to claim 8 or 9, wherein the depth values to be corrected are assigned to one of the reliable regions based on the color segmentation.

11. A device according to claim 10, wherein the corrected depth value is determined by interpolation of neighboring depth values.

12. A device according to any one of claims 8 to 11, wherein the processor is configured to obtain reliable regions by generating a homogeneous depth region for each reliable region from at least one reliable depth value.

13. A device according to claim 12, wherein the processor is configured to perform depth segmentation for the reliable regions by clipping with an argument based on the average of contiguous points.

14. A device according to any one of claims 8 to 13, wherein the processor is configured to perform a graph cut process for color segmentation.

15. A computer program product for a programmable apparatus, the computer program product comprising a sequence of instructions for implementing a method according to any one of claims 1 to 7 when loaded into and executed by the programmable apparatus.

110

IMAGE DATA
SOURCE

DISPLAY

120

DEPTH MAP
PROCESSOR

130

**FIG.1**

Acquired depth map

IDENTIFY
ERROR REGION — S101

OBTAIN LOCAL
RELIABLE REGIONS — S102

Colour
Map → RETRIVE COLOUR
DATA — S103

PERFORM COLOUR
SEGMENTATION — S104

ALLOCATE CORRECTED
DEPTH VALUES — S105

Corrected depth map

**FIG. 2**

**FIG.3**

**FIG.4**

**FIG.5A**

**FIG.5B**

**FIG.5C**

**FIG.5D**

**FIG.5E**

**FIG.5F**

FIG.6

**FIG.7**

Europäisches
Patentamt

European
Patent Office

Office européen
des brevets

## EUROPEAN SEARCH REPORT

Application Number

EP 14 30 6837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENG LU ET AL: "Depth enhancement based on hybrid geometric hole filling strategy", 2013 IEEE INTERNATIONAL CONFERENCE ON IMAGE PROCESSING, IEEE, 15 September 2013 (2013-09-15), pages 2173-2176, XP032566038, DOI: 10.1109/ICIP.2013.6738448 [retrieved on 2014-02-11] | 1-5,7-15 | INV. G06T5/00 |
| Y | * abstract * * page 2174, left-hand column, lines 7,21 - line 23 * * page 2174, left-hand column, last two lines * * page 2174, right-hand column, line 2 - line 5 * * page 2174, right-hand column, equation 4 * ----- | 6 | |
| X | LIANG WANG ET AL: "Stereoscopic inpainting: Joint color and depth completion from stereo images", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-8, XP031297262, ISBN: 978-1-4244-2242-5 | 1-3,5, 7-10,12, 14,15 | TECHNICAL FIELDS SEARCHED (IPC) G06T |
| Y | * page 2, left-hand column, line 39 - lines 41, 46-50 * * page 2, right-hand column, line 33 - lines 37, 41-43 * * page 3, left-hand column, line 2 - line 5 * * page 3, right-hand column, equation 3 * * page 3, left-hand column, paragraph before and after equation 3 * ----- | 6 | |

The present search report has been drawn up for all claims

| Place of search | Date of completion of the search | Examiner |
|---|---|---|
| Munich | 29 April 2015 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document